Europäisches Patentamt

European Patent Office

Office européen des brevets

(11) Veröffentlichungsnummer: **0 320 595**
**A2**

(12) **EUROPÄISCHE PATENTANMELDUNG**

(21) Anmeldenummer: **88117182.1**

(22) Anmeldetag: **15.10.88**

(51) Int. Cl.4: **B60R 13/06**

(30) Priorität: **16.12.87 DE 3742605**

(43) Veröffentlichungstag der Anmeldung:
**21.06.89 Patentblatt 89/25**

(84) Benannte Vertragsstaaten:
**BE DE ES FR GB IT NL SE**

(71) Anmelder: **Continental Aktiengesellschaft**
**Königsworther Platz 1**
**D-3000 Hannover 1(DE)**

(72) Erfinder: **Fischer, Rolf**
**Marschnerstrasse 15**
**D-3000 Hannover 1(DE)**
Erfinder: **Hermann, Dietmar, Dipl.-Ing.**
**Kantstrasse 7**
**D-3008 Garbsen 6(DE)**
Erfinder: **Langer, Wolf-Rainer, Dipl.-Ing.**
**Langestrasse 71**
**D-3008 Garbsen 4(DE)**
Erfinder: **Brodmann, Richard, Ing.**
**Sadebuschstrasse 15**
**D-3000 Hannover 21(DE)**

(54) **Dichtungsprofil.**

(57) Das zum Abdichten einer Fahrzeugtür gegen das Fahrzeugdach vorgesehene Dichtungsprofil weist einen Profilteil (3) auf, welcher unter Vorspannung stehend im Dachkantenbereich abgestützt ist. Eine elastisch nachgiebige Lippe (2) wird von der geschlossenen Fahrzeugtür im Bereich der Dachkante (4.1) gegen den Profilteil (3) gedrückt.

FIG.1

EP 0 320 595 A2

## Dichtungsprofil

Die Erfindung betrifft ein Dichtungsprofil aus Gummi oder gummiähnlichem Kunststoff zum Abdichten einer Fahrzeugtür gegen das Fahrzeugdach mit einem an der Fahrzeugkarosserie, beispielsweise an einer Abwinkelung des Dachbleches, befestigbaren Fußteil, einem karosserieseitig im Dachkantenbereich abstützbaren Profilteil und einer auswärts angeordneten elastisch nachgiebigen Lippe.

Ein derartiges Dichtungsprofil ist aus der EP-A-o 172 144 bekannt. Bei diesem Dichtungsprofil ist der am Dachkantenbereich abstützbare Profilteil etwa trapezförmig gestaltet und besteht aus Weichgummi, so daß beim Schließen der Fahrzeugtür der obere Rahmenbereich derselben den Profilteil gegen den Dachkantenbereich drückt und komprimiert, wodurch die erwünschte Abdichtung erzielt wird. Eine vom Fußbereich des Dichtungsprofiles sich seitlich auswärts erstreckende, kurze Lippe stützt sich bei geschlossener Fahrzeugtür an dieser ab. Bei geöffneter Fahrzeugtür wird ein Wasserablaufkanal zwischen der Innenseite des etwa trapezförmigen Profilteiles, der Innenseite des Fußbereiches und der Abwinkelung des Fahrzeugdaches, wo das Dichtungsprofil befestigt ist, gebildet.

Die Erfindung hat sich nun die Aufgabe gestellt, ein Dichtungsprofil der eingangs genannten Art so zu gestalten, daß bei aerodynamisch günstiger und einfacher Konstruktion eine optimale Abdichtung erzielbar ist und bei geöffneter Fahrzeugtür ein großräumiger Wasserablaufkanal zur Verfügung steht, der jedoch durch keine metallischen Karosserieteile begrenzt ist.

Gelöst wird die gestellte Aufgabe erfindungsgemäß dadurch, daß der Profilteil sowohl bei geschlossener als auch bei geöffneter Fahrzeugtür am Dachkantenbereich anliegt und/oder unter Vorspannung am Dachkantenbereich abgestützt ist, während die Lippe bei geöffneter Fahrzeugtür vom Dachkantenbereich absteht und bei geschlossener Fahrzeugtür durch deren Oberkante im Dachkantenbereich gegen den Profilteil gedrückt ist.

Das erfindungsgemäße Dichtungsprofil ist vorteilhafterweise so ausgelegt bzw. gestaltet, daß der im Dachkantenbereich unter Vorspannung abgestützte Profilteil sowohl bei geöffneter als auch bei geschlossener Fahrzeugtür vom Dachbereich her keine Feuchtigkeit bzw. Wasser in den Bereich zwischen dem Profilteil und der zur Befestigung des Dichtungsprofiles vorgesehenen Abwinkelung des Karosseriebleches eindringen läßt. Der Wasserablaufkanal wird vom Dichtungsprofil selbst, und zwar zwischen dem Profilteil und der Lippe gebildet. Bei geschlossener Tür deckt die Lippe den Wasserablaufkanal dichtend ab.

In Ausgestaltung der vorliegenden Erfindung wird vorgeschlagen, die Außenseite der Lippe zumindest teilweise mit einer reibungsmindernden Folie, beispielsweise aus Polytetrafluorethylen, zu belegen und haftend zu verbinden. Diese Maßnahme trägt nicht nur zur Verringerung der Türschließkräfte, sondern auch zur Optimierung der Abdichtung bei.

Bei einer bevorzugten Ausführungsform der Erfindung überragt die Lippe - im Querschnitt betrachtet - den Profilteil, wobei der überragende Teil der Lippe bevorzugt karosserieeinwärts gekrümmt ist. Hierdurch legt sich die Lippenkante beim Schließen der Fahrzeugtür von oben über den Wasserablaufkanal, und die Lippe paßt sich stetig der Karosserieoberfläche an, wodurch beim Fahren die Entstehung von Windgeräuschen an der Dachkante minimiert wird, während bei geöffneter Tür das Überströmen von Wasser in den offenen Türöffnungsbereich noch sicherer verhindert ist.

Weitere Merkmale, Vorteile und Einzelheiten der Erfindung werden nun anhand der Zeichnung, die ein Ausführungsbeispiel des erfindungsgemäßen Dichtungsprofiles darstellt, näher beschrieben. Hierbei zeigen

Fig. 1 das erfindungsgemäße Dichtungsprofil im Querschnitt am Fahrzeug befestigt in seiner Lage bei geschlossener Fahrzeugtür und

Fig. 2 das Dichtungsprofil in seiner Lage bei geöffneter Fahrzeugtür.

Das Dichtungsprofil 1 ist aus Gummi oder einem gummiähnlichen Kunststoff - vorzugsweise durch Extrudieren - gefertigt. Wie aus den Zeichnungsfiguren ersichtlich, ist das Dichtungsprofil 1 mittels seines Fußteiles 5 an einer Abwinkelung 4.2 des Dachbleches 4 festgeklemmt. Der etwa U-förmig gestaltete Fußteil 5 weist hierbei in an sich bekannter Weise an seiner Innenseite unter einem Winkel angeordnete Fortsätze 6 auf, die ein ungewolltes Abgleiten des Dichtungsprofiles 1 von der Abwinkelung 4.2 des Dachbleches 4 verhindern.

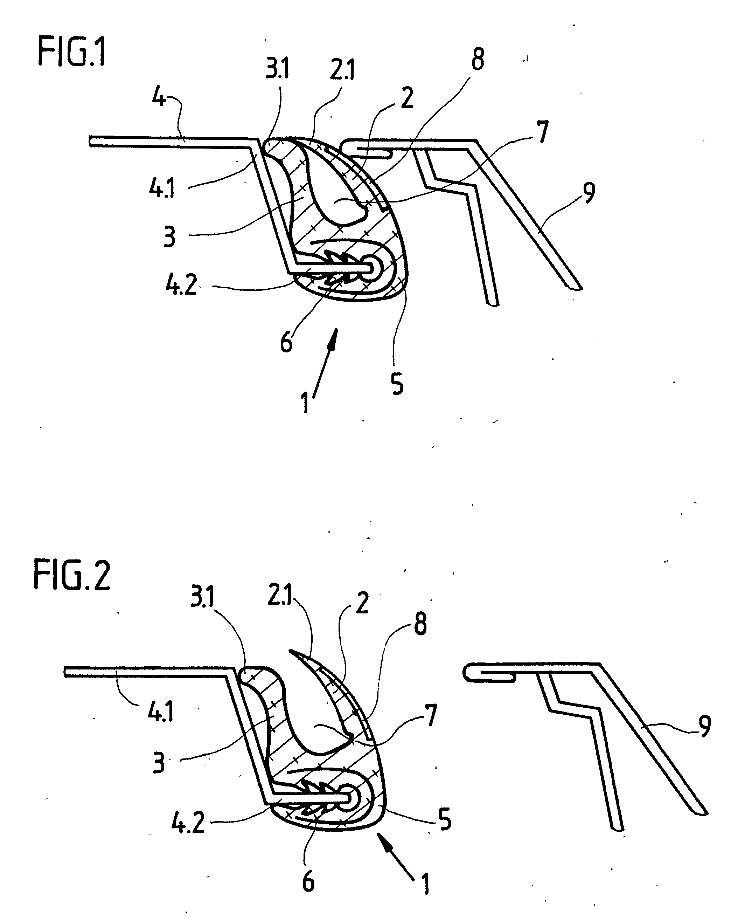

An den Fußteil 5 schließt sich dachseitig ein Profilteil 3 an, welcher sich in der festgeklemmten Lage des Dichtungsprofiles 1 unter Vorspannung an die Dachkante 4.1 anlegt. Hierzu bildet der obere Endbereich des Profilteiles 3 einen abgerundeten, zur Dachkante weisenden Stützbereich 3.1. Außenseitig schließt an den Fußteil 5 des Dichtungsprofiles 1 eine elastisch nachgiebige Lippe 2 an, derart, daß bei geöffneter Tür 9, wie in Fig. 2 dargestellt, zwischen dem Profilteil 3 und der Lippe 2 ein großräumiger, im Querschnitt etwa U-förmiger Wasserablaufkanal 7 gebildet wird. Im Querschnitt betrachtet, entspricht die Länge der Lippe 2 zumindest der Länge des Profilteils 3, so daß beim Schließen der Fahrzeugtür 9 der obere Randbereich des Türrahmens die Lippe 2 gegen den oberen Randbereich des Profilteiles 3 drückt. Bei geschlossener Tür ist somit der Bereich zwischen Dach und Tür sicher abgedichtet, so daß keine Feuchtigkeit und Nässe eindringen kann, und gleichzeitig deckt die Lippe 2 den Wasserablaufkanal 7 dichtend ab.

Die vorliegende Dichtungsprofilkonstruktion gestattet außerdem eine aerodynamisch besonders günstige Abdichtung, da die oberen Endbereiche des Profilteils 3 und der Lippe 2 mit der Dachoberfläche im wesentlichen fluchten können.

Bei geöffneter Tür 9 ist sichergestellt, daß der zwischen Profilteil 3, Fußteil 5 und Lippe 2 gebildete Wasserablaufkanal 7 jegliches über die Dachkante abfließendes Wasser auffängt und ableitet, so daß die darunterliegende Türöffnung trockengehalten wird.

Um die Türschließkräfte möglichst gering zu halten, ist es vorteilhaft, wenn die Außenseite der Lippe 2 zumindest teilweise mit einer reibungsmindernden Folie 8 belegt und haftend verbunden ist. Hierzu ist insbesondere eine Folie aus Polytetrafluorethylen geeignet.

Abweichend von der dargestellten Ausführungsform sind auch andere Befestigungsarten des erfindungsgemäßen Dichtungsprofiles 1 an der Fahrzeugkarosserie denkbar. So ist es möglich, den Fußteil 5 ohne die Fortsätze 6 zu gestalten und an der Abwinkelung der Fahrzeugkarosserie anzukleben. Ferner ist es möglich, eine Clips-Befestigung vorzusehen.

Das Dichtungsprofil 1 kann einteilig durchgehend aus demselben Werkstoff hergestellt sein; es ist aber auch möglich, den Fußbereich aus einem anderen, vorzugsweise härteren Material zu fertigen als den Profilteil 3 und die Lippe 2. Die verschiedenen Teile können dann etwa miteinander verklebt werden, oder sie werden gemeinsam durch Koextrusion hergestellt und bei der anschließenden Vulkanisation fest miteinander verbunden.

In der dargestellten vorteilhaften Ausführungsform des erfindungsgemäßen Dichtungsprofils ist die Lippe 2 länger ausgeführt als der Profilteil 3, wobei der den Profilteil 3 überragende Teil 2.1 der Lippe 2 karosserieeinwärts gekrümmt ist.

## Ansprüche

1. Dichtungsprofil aus Gummi oder Kunststoff zum Abdichten einer Fahrzeugtür gegen das Fahrzeugdach mit einem an der Fahrzeugkarosserie, beispielsweise an einer Abwinkelung des Dachbleches, befestigbaren Fußteil, einem karosserieseitig im Dachkantenbereich abstützbaren Profilteil und einer auswärts angeordneten elastisch nachgiebigen Lippe, **dadurch gekennzeichnet,** daß der Profilteil (3) sowohl bei geschlossener als auch bei geöffneter Fahrzeugtür (9) am Dachkantenbereich (4.1) anliegt und/oder unter Vorspannung am Dachkantenbereich (4.1) abgestützt ist, während die Lippe (2) bei geöffneter Fahrzeugtür (9) vom Dachkantenbereich (4.1) absteht und bei geschlossener Fahrzeugtür (9) durch deren Oberkante im Bereich der Dachkante (4.1) gegen den Profilteil (3) gedrückt ist.

2. Dichtungsprofil nach Anspruch 1, dadurch gekennzeichnet, daß die Außenseite der Lippe (2) zumindest teilweise mit einer reibungsmindernden Folie (8), beispielsweise aus Polytetrafluorethylen, belegt und haftend verbunden ist.

3. Dichtungsprofil nach Anspruch 1 oder 2, dadurch gekennzeichnet, daß die Lippe (2), im Querschnitt betrachtet, den Profilteil (3) überragt, wobei der überragende Teil (2.1) der Lippe (2) karosserieeinwärts gekrümmt ist.

FIG.1

FIG.2